# EUROPEAN PATENT SPECIFICATION

(11) **EP 3 238 801 B1**
(45) Date of publication and mention of the grant of the patent: **13.03.2019**
(21) Application number: 17460024.7
(22) Date of filing: 21.04.2017
(51) Int. Cl.: B01D 17/04, B01D 17/00, E03F 5/16

(54) **HYBRID COALESCING SEPARATOR**
HYBRID KOALESZENZ ABSCHEIDER
SÉPARATEUR HYBRIDE AVEC COALESCEUR

(30) Priority: 29.04.2016 PL 41706216
(43) Date of publication of application: 01.11.2017
(73) Proprietor: Delfin Sp. z o.o., 25-852 Kielce (PL)
(72) Inventor: Skrzypczak, Dariusz, 25-640 Kielce (PL)
(74) Representative: Fietko-Basa, Sylwia

(56) References cited:
- FR-A1- 2 455 715
- US-A- 2 468 864
- US-A- 4 717 475
- US-A- 4 828 707
- US-A- 5 229 015
- US-A- 5 500 132
- US-A1- 2016 039 684
- US-B1- 9 102 886

## Description

The present invention relates to a hybrid coalescing separator for separating oil residue from rainfall sewage water and road, parking lot and gas station sewage water and gas station, and a flow-through devices for this type of separators.

A coalescing separator consisting of a flow-through tank with inlet and outlet tubes, within which is mounted a spatially shaped coalescing unit comprising grated or meshed cage installed in the vertical part of the outlet tube is known from the Polish invention claim number 405337. The cage holds replaceable sorption inserts.

In one of the variants of the solution the walls of the cage are made of sorption material or are lined with sorption material. In another variant of embodiment of the invention, the cage is made of segments, connected individually one to the next, preferably with bolts or rivets.

Also, a coalescing separator containing a tank with an inlet and outlet tube, equipped with a settlement chamber, slow-down chamber and 1^{st} and 2^{nd} stage coalescing chambers with flow-through funnels, these chambers being separated from one another with separating walls, where the 1^{st} stage separation chamber contains a coalescing insert, and 2^{nd} stage separation chamber contains a textile filter and a float valve, is known from the Polish invention claim number PL202319.

Also, packing rings are known from the art, including Bialecki rings and Raschig rings, used as a bed packing for mass exchangers such as rectification columns or absorption columns, used in chemical processing installations. An example of packing rings used before a filter bed for separation of oil from a water stream is given in US2468864.

The hybrid coalescing separator consistent with this invention has the shape of a tank with fluid inlet and outlet, containing a treatment chamber with at least one coalescing filter, characterized in that on the path of the flotation flow of the fluid to the coalescing filter is located at least one flow-through device with packing rings.

Preferably, the flow-through device with packing rings is situated at the inlet to the treatment chamber.

The coalescing filter has the form of a perforated tube wrapped in filtration material

Preferably, the filtration material has the form of a polyurethane foam.

Preferably, the separator tank is modular in construction.

Preferably, the separator consistent with this invention comprises and additional desludging chamber.

Preferably, the separator consistent with this invention has a separating wall between the desludging chamber and the treatment chamber.

The flow-through device of the hybrid coalescing separator consistent with this invention is characteristic in that it has the shape of an openwork cage with an openwork lid, containing one or more layers of packing rings aligned with the flow of the liquid, whereas the packing rings, placed in one or more layers, create an openwork space inside of the cage.

The rings in each layer are placed one next to another, filling the whole inner space of the cage.

Preferably, the openwork cage has the form of a flat cuboid with height adjusted to the height of combined layers of packing rings, and the upper edge of the cage is equipped with a flange.

Preferably, the openwork lid of the cage is equipped with a handle.

As a result of the use of a flow-through device consistent with this invention in a hybrid coalescing separator, a very high level of treatment effectiveness was achieved. The use of the flow-through device allowed to stabilise the flow rate and improve the inflow of sewage on the coalescing filter, responsible for the final process of separation of oil-derived compounds and creation of the light liquid layer. As a result of treatment effectiveness study, carried out in the Laboratory Unit of the Miejskie Przedsi 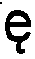 biorstwo Wodoci 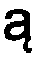 gów i Kanalizacji w m. st. Warszawie Spó 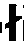 ka Akcyjna [Municipal Waterwork and Sewage Utility in the Capital City of Warsaw Joint-Stock Company], it was established that the use of a separator consistent with this invention allows to achieve a result of 0.1 mg/l of oil residues in the tested liquid, while the European standards permit the values of up to 5 mg/l.

The invention was presented in examples of embodiment in the illustration, whereby:

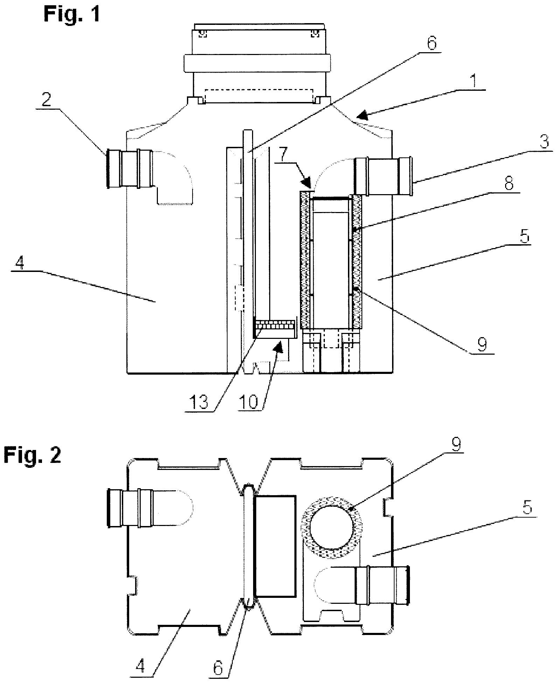

fig. 1 is a vertical cross-sectional view of a hybrid coalescing separator with integrated desludging chamber and treatment chamber,
fig. 2 is a horizontal cross-sectional view of a hybrid coalescing separator with integrated desludging chamber and treatment chamber,

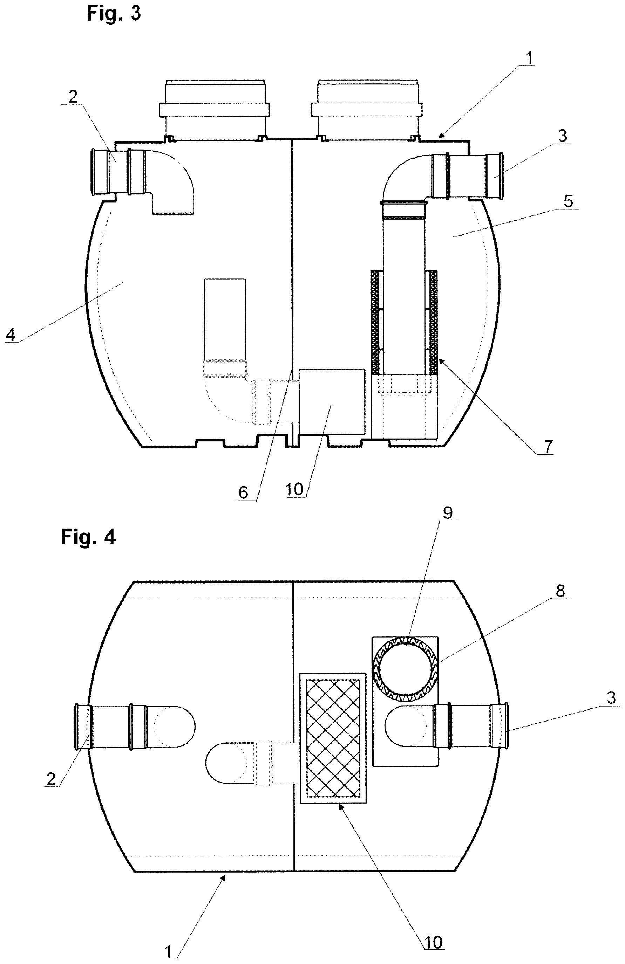

fig. 3 is a vertical cross-sectional view of a hybrid coalescing separator of modular structure, with a desludging chamber and a treatment chamber,
fig. 4 is a horizontal cross-sectional view of a hybrid coalescing separator of modular structure, with a desludging chamber and a treatment chamber,

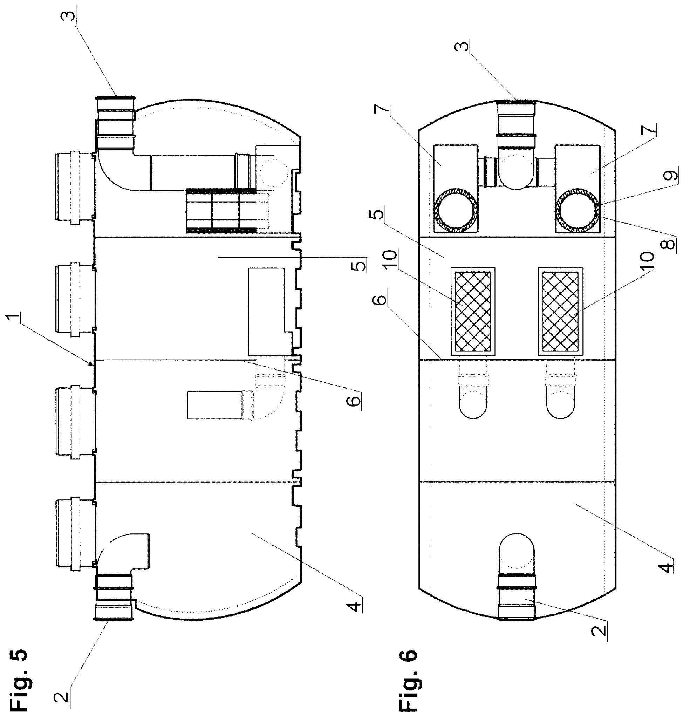

fig. 5 is a vertical cross-sectional view of a hybrid coalescing separator of compound modular structure, with a desludging chamber and a treatment chamber,
fig. 6 is a horizontal cross-sectional view of a hybrid coalescing separator of compound modular structure, with a desludging chamber and a treatment chamber,

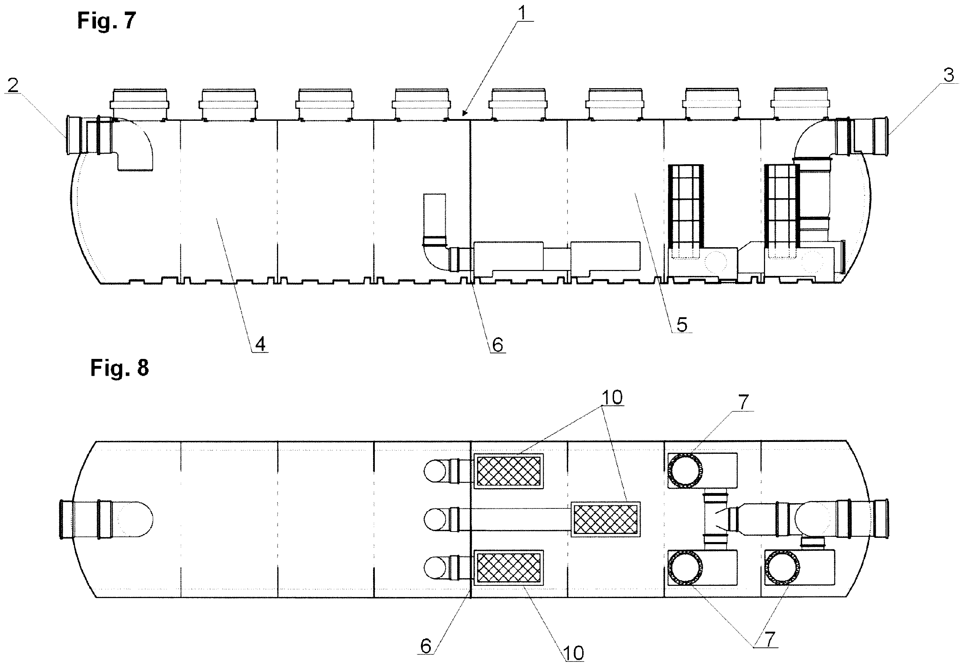

fig. 7 is a vertical cross-sectional view of a hybrid coalescing separator of multi-modular structure, with a desludging chamber and a treatment chamber,
fig. 8 is a horizontal cross-sectional view of a hybrid coalescing separator of multi-modular structure, with a desludging chamber and a treatment chamber,

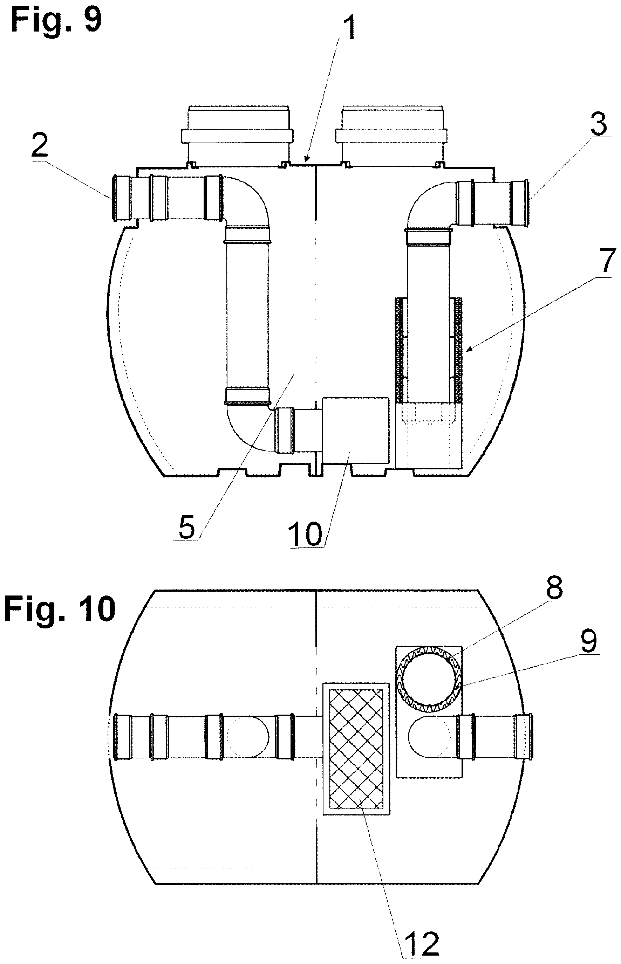

fig. 9 is a vertical cross-sectional view of a hybrid coalescing separator of modular structure, with a treatment chamber,
fig. 10 is a horizontal cross-sectional view of a hybrid coalescing separator of modular structure, with a treatment chamber,

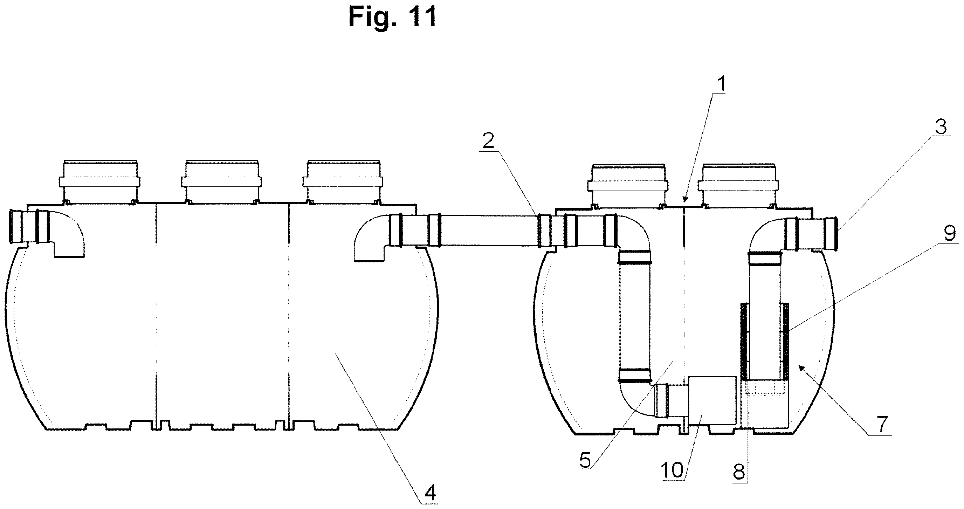

fig.11 is a vertical cross-sectional view of a hybrid coalescing separator of modular structure, with a treatment chamber and an external desludging chamber,

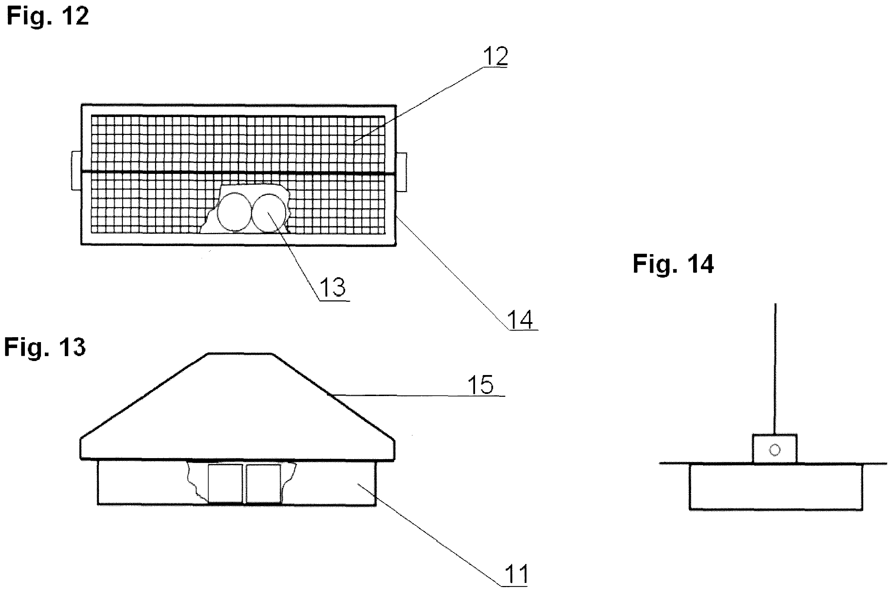

fig. 12 is a top view of the flow-through device of a hybrid coalescing separator with a single layer of packing rings,
fig. 13 is a front view of the flow-through device of a hybrid coalescing separator with a single layer of packing rings,
fig. 14 is a side view of the flow-through device of a hybrid coalescing separator with a single layer of packing rings.

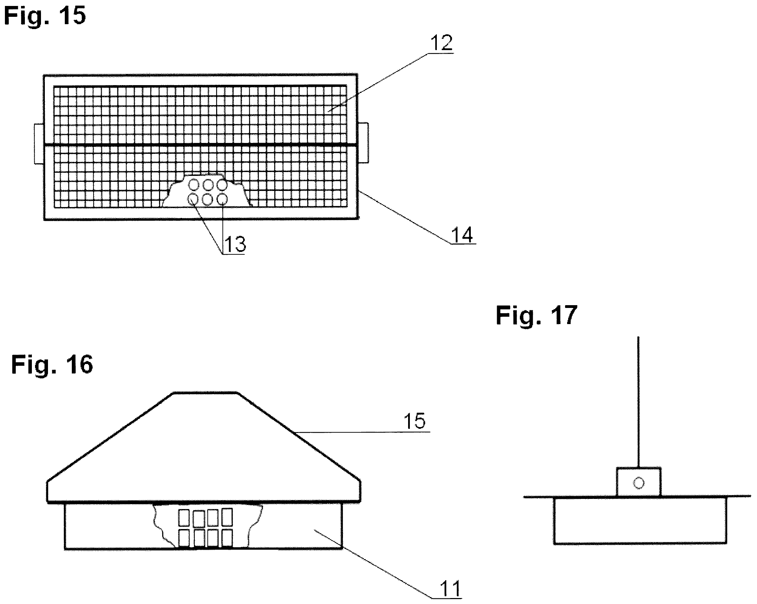

fig. 15 is a top view of the flow-through device of a hybrid coalescing separator with two layers of packing rings,
fig. 16 is a front view of the flow-through device of a hybrid coalescing separator with two layers of packing rings,
fig. 17 is a side view of the flow-through device of a hybrid coalescing separator.

The first exemplary embodiment shows a hybrid coalescing separator consistent with the invention for nominal flows from 3 to 20 litres per second (l/s). The hybrid coalescing separator comprises a tank 1 equipped with an inlet tube 2 and outlet tube 3, whereas the tank 1 contains an integrated desludging chamber 4 and treatment chamber 5, separated by a separation wall 6. The treatment chamber 5 contains a coalescing filter 7 in a form of a perforated cylinder 8 wrapped in sponge filter 9. At the inlet to the treatment chamber 5 there is a flow-through device 10, in a form of an openwork cage 11, with an openwork lid 12, containing two layers of Bialecki packing rings 13, aligned with the flow of the fluid. The openwork cage 11 has a form of a flat cuboid of height adjusted to the total height of packing ring layers 13, and the top edge of the cage ends with a flange 14. The layers of packing rings 13 are placed against each other is such a way as to create an openwork space inside of the cage 11.

The second exemplary embodiment shows a hybrid coalescing separator consistent with the invention for nominal flows from 30 to 50 l/s. The coalescing separator has a modular structure and comprises a tank 1 consisting of two modules and equipped with an inlet tube 2 and outlet tube 3, whereas the tank 1 contains a desludging chamber 4 and a treatment chamber 5 separated by a separation wall 6. The treatment chamber contains a coalescing filter 7 in a form of a perforated cylinder 8 wrapped in sponge filter 9. At the inlet to the treatment chamber 5 there is a flow-through device 10, in a form of an openwork cage 11, with an openwork lid 12, containing two layers of Bialecki packing rings 13, aligned with the flow of the fluid. The openwork cage 11 has a form of a flat cuboid of height adjusted to the total height of packing ring layers 13, and the top edge of the cage ends with a flange 14. The layers of packing rings 13 are placed against each other is such a way as to create an openwork space inside of the cage 11.

The third exemplary embodiment shows a hybrid coalescing separator consistent with the invention for nominal flows from 30 to 50 l/s. The coalescing separator has a modular structure and consists of a tank 1 consisting of two modules and equipped with an inlet tube 2 and outlet tube 3, whereas the tank 1 contains a desludging chamber 4 and a treatment chamber 5 separated by a separation wall 6. The treatment chamber contains a coalescing filter 7 in a form of a perforated cylinder 8 wrapped in sponge filter 9. At the inlet to the treatment chamber 5 there is a flow-through device 10, in a form of an openwork cage 11, with an openwork lid 12, containing a single layer of Bialecki packing rings 13, aligned with the flow of the fluid. The openwork cage 11 has a form of a flat cuboid of height adjusted to the height of the packing ring layer 13, and the top edge of the cage ends with a flange 14. The layer of packing rings 13 creates an openwork space inside of the cage 11.

The fourth exemplary embodiment shows a hybrid coalescing separator consistent with the invention for nominal flows of 100 l/s or higher. The coalescing separator has a compound modular structure and consists of a tank 1 equipped with an inlet tube 2 and outlet tube 3, whereas the tank 1 contains a desludging chamber 4 and a treatment chamber 5 separated by a separation wall 6, whereas each of the chambers consists of two modules. The treatment chamber 5 contains two coalescing filters 7, both in a form of a perforated cylinder 8 wrapped in sponge filter 9. At the inlet to the treatment chamber 5 there are two flow-through devices 10, each in a form of an openwork cage 11, with an openwork lid 12, containing two layers of Bialecki packing rings 13, aligned with the flow of the fluid. The openwork cage 11 has a form of a flat cuboid of height adjusted to the total height of packing ring layers 13, and the top edge of the cage ends with a flange 14. The layers of packing rings 13 are placed against each other is such a way as to create an openwork space inside of the cage 11.

The fifth exemplary embodiment shows a hybrid coalescing separator consistent with the invention for nominal flows of 200 l/s. The coalescing separator has a multi-modular structure and consists of a tank 1 equipped with an inlet tube 2 and outlet tube 3, whereas the tank 1 contains a desludging chamber 4 and a treatment chamber 5 separated by a separation wall 6, whereas each of the chambers consists of four modules. The treatment chamber 5 contains three coalescing filters 7, each in a form of a perforated cylinder 8 wrapped in sponge filter 9. At the inlet to the treatment chamber 5 there are three flow-through devices 10, each in a form of an openwork cage 11, with an openwork lid 12, containing two layers of Bialecki packing rings 13, aligned with the flow of the fluid. The openwork cage 11 has a form of a flat cuboid of height adjusted to the total height of packing ring layers 13, and the top edge of the cage ends with a flange 14. The layers of packing rings 13 are placed against each other is such a way as to create an openwork space inside of the cage 11.

The sixth exemplary embodiment shows a hybrid coalescing separator consistent with the invention for nominal flows from 75 to 100 l/s. The coalescing separator consists of a tank 1 comprising two modules, equipped with an inlet tube 2 and outlet tube 3, whereas the tank 1 contains a treatment chamber 5. The treatment chamber 5 contains two coalescing filters 7, both in a form of a perforated cylinder 8 wrapped in sponge filter 9. At the inlet to the treatment chamber 5, on the flow path of the fluid, there is a flow-through device 10. At the inlet to the flow-through device there is an end of the inlet tube 2. The flow-through device has a form of an openwork cage 11, with an openwork lid 12, equipped with a handle 15, containing two layers of Bialecki packing rings 13, aligned with the flow of the fluid. The openwork cage 11 has a form of a flat cuboid of height adjusted to the total height of packing ring layers 13, and the top edge of the cage ends with a flange 14. The layers of packing rings 13 are placed against each other is such a way as to create an openwork space inside of the cage 11.

The seventh exemplary embodiment shows a hybrid coalescing separator consistent with the invention for nominal flows from 75 to 100 l/s. The coalescing separator consists of a tank 1 comprising two modules, equipped with an inlet tube 2 and outlet tube 3, whereas the tank 1 contains a treatment chamber 5, whereas the desludging chamber is located outside of the tank 1. The treatment chamber 5 contains a coalescing filter 7 in a form of a perforated cylinder 8 wrapped in sponge filter 9. At the inlet to the treatment chamber 5, on the flow path of the fluid, there is a flow-through device 10. At the inlet to the flow-through device there is an end of the inlet tube 2. The flow-through device has a form of an openwork cage 11, with an openwork lid 12, containing two layers of Bialecki packing rings 13, aligned with the flow of the fluid. The openwork cage 11 has a form of a flat cuboid of height adjusted to the total height of packing ring layers 13, and the top edge of the cage ends with a flange 14. The layers of packing rings 13 are placed against each other is such a way as to create an openwork space inside of the cage 11.

In the eight exemplary embodiment the flow-through device to the hybrid coalescing separator has the form of an openwork cage 11, with an openwork lid 12 equipped with a handle 15. Inside of the openwork cage 11 there is one layer of Bialecki packing rings of 50 mm diameter and 50 mm height. The openwork cage 11 has the form of a flat cuboid with height adjusted to the total height of the packing ring layers 13, and the top edge of the cage ends with a flange 14. The layers of packing rings 13 are placed against each other is such a way as to create an openwork space inside of the cage 11.

In the ninth exemplary embodiment the flow-through device to the hybrid coalescing separator has the form of an openwork cage 11, with an openwork lid 12 equipped with a handle 15. Inside of the openwork cage 11 there are two layers of Bialecki packing rings of 25 mm diameter and 25 mm height, aligned with the flow of the fluid. The openwork cage 11 has the form of a flat cuboid with height adjusted to the total height of the packing ring layers 13, and the top edge of the cage ends with a flange 14. The layers of packing rings 13 are placed against each other is such a way as to create an openwork space inside of the cage 11.

## Claims

1. A hybrid coalescing separator comprising a tank with fluid inlet(s) and outlet(s), comprising a treatment chamber with at least one coalescing filter and at least one flow-through device with packing rings placed on the path of the flotation flow of the fluid to the coalescing filter **characterized in that** the flow-through device (10) has the shape of an openwork cage (11) with an openwork lid (12), containing one or more layers of packing rings (13) aligned with the flow of the liquid, whereas the packing rings (13) in each layer are placed one next to another, filling the whole inner space of the openwork cage (11), and the coalescing filter (7) has the form of a perforated cylinder (8) wrapped in filtration material (9).

2. The coalescing separator of claim 1 **characterized in that** the flow-through device (10) equipped with packing rings (13) is located at the entrance to the treatment chamber (5).

3. The hybrid coalescing separator of claim 1, **characterized in that** the upper and lower opening of the rings (13) are aligned with the flow of the liquid.

4. The hybrid coalescing separator of claim 1, **characterized in that** the tank (1) of the separator has modular structure.

5. The hybrid coalescing separator of claim 1 to 3 , **characterized in that** it contains a desludging chamber (4).

6. The hybrid coalescing separator of claim 1, **characterized in that** the filtration material (9) has the form of polyurethane foam.

7. The hybrid coalescing separator of claim 35, **characterized in that** there is a separating wall (6) between the desludging chamber (4) and the treatment chamber (5).

8. The hybrid coalescing separator of claim 1, **characterized in that** the openwork cage (11) has the form of a flat cuboid with height adjusted to the height of combined layers of packing rings (13), and the upper edge of the openwork cage (11) ends with a flange (14).

9. The hybrid coalescing separator of claim 1, **characterized in that** the openwork lid (12) of the openwork cage (11) is equipped with a handle (15).

## Patentansprüche

1. Hybrid-Koaleszenzabscheider in Form eines Behälters mit Ein- und Auslaufstützen für Flüssigkeit, der eine Reinigungskammer mit mindestens einem Koaleszenzfilter und mindestens einer Durchflusseinrichtung mit Formringen enthält, die auf dem Wege des Flotationsdurchflusses der Flüssigkeit zum Koaleszenzfilter angeordnet ist, **dadurch gekennzeichnet, dass** die Durchflusseinrichtung (10) die Form eines durchbrochenen Korbes (11) mit durchbrochenem Deckel (12) hat, in dem sich eine oder mehrere Schichten aus Formringen (13) befinden, angeordnet in der Durchflussrichtung der Flüssigkeit, wobei in jeder Schicht die Ringe (13) nebeneinander liegen und dien ganzen Raum des durchbrochenen Korbes (11) füllen, während das Koaleszenzfilter (7) als mit Filtriermaterial (9) umhülltes perforiertes Rohr (8) ausgelegt ist.

2. Hybrid-Koaleszenzabscheider gemäß Patentanspruch 1 **dadurch gekennzeichnet, dass** die mit Formringen (13) ausgestattete Durchflusseinrichtung (10) am Eingang der Reinigungskammer (5) angeordnet ist.

3. Hybrid-Koaleszenzabscheider gemäß Patentanspruch 1 **dadurch gekennzeichnet, dass** jeweils die obere und die unter Öffnung der Ringe (13) in Durchflussrichtung der Flüssigkeit angeordnet sind.

4. Hybrid-Koaleszenzabscheider gemäß Patentanspruch 1 **dadurch gekennzeichnet, dass** der Behälter (1) des Abscheiders einen modularen Aufbau aufweist.

5. Hybrid-Koaleszenzabscheider gemäß Patentansprüchen 1 bis 3 **dadurch gekennzeichnet, dass** er eine Entschlammungskammer (4) enthält.

6. Hybrid-Koaleszenzabscheider gemäß Patentanspruch 1 **dadurch gekennzeichnet, dass** das Filtriermaterial (9) Polyurethanschaum ist.

7. Hybrid-Koaleszenzabscheider gemäß Patentanspruch 5 **dadurch gekennzeichnet, dass** zwischen der Entschlammungskammer (4) und der Reinigungskammer (5) die Scheidewand (Leitfläche) (6) angeordnet ist.

8. Hybrid-Koaleszenzabscheider gemäß Patentanspruch 1 **dadurch gekennzeichnet, dass** der durchbrochene Korb (11) die Form eines flachen Quaders mit einer Höhe hat, die der Höhe der zusammengelegten Formring(13)-Schichten angepasst ist, wobei der obere Rand des durchbrochenen Korbes (11) mit dem Flansch (14) versehen ist.

9. Hybrid-Koaleszenzabscheider gemäß Patentanspruch 1 **dadurch gekennzeichnet, dass** der durchbrochene Deckel (12) des durchbrochenen Korbes (11) mit dem Griff (15) ausgestattet ist.

## Revendications

1. Le séparateur à coalescence hybride, ayant la forme d'un réservoir avec des sorties pour l'entrée et la sortie de liquide, comprenant une chambre d'épuration dotée d'au moins un filtre à coalescence et d'au moins un dispositif d'écoulement à anneaux profilés, placés dans la voie d'écoulement de flottation au filtre à coalescence est **caractérisé en ce que** le dispositif d'écoulement (10) a la forme de panier ajouré (11), à couvercle ajouré (12), à l'intérieur duquel une ou plusieurs couches d'anneaux profilés sont disposées (13), positionnées dans le sens d'écoulement de liquide ; dans chaque couche les anneaux (13) sont disposés l'un à côté de l'autre et remplissent l'espace entier du panier ajouré (11) alors que le filtre à coalescence a la forme de tube perforé (8), enrobé avec un matériau de filtration (9).

2. Le séparateur à coalescence hybride, selon la revendication de brevet 1, est **caractérisé en ce que** le dispositif d'écoulement (10), doté d'anneaux profilés (13), est situé à l'entrée de la chambre d'épuration (5).

3. Le séparateur à coalescence hybride, selon la revendication de brevet 1, est **caractérisé en ce que** les ouvertures haute et basse d'anneaux (13) sont situées dans le sens d'écoulement de liquide.

4. Le séparateur à coalescence hybride, selon la revendication de brevet 1, est **caractérisé en ce que** le réservoir (1) a une structure modulaire.

5. Le séparateur à coalescence hybride, selon les revendications de brevet 1 à 3, est **caractérisé en ce qu'**il comprend une chambre de curage.

6. Le séparateur à coalescence hybride, selon la revendication de brevet 1, est **caractérisé en ce que** le matériau filtrant (9) a la forme de mousse de polyuréthanne.

7. Le séparateur à coalescence hybride selon la revendication 5 est **caractérisé en ce qu'**entre la chambre de curage (4) et la chambre d'épuration (5) est située une cloison (6).

8. Le séparateur à coalescence hybride, selon la revendication de brevet 1, est **caractérisé en ce que** le panier ajouré (11) a la forme d'un parallélépipède plat, de hauteur adaptée à la hauteur de couches d'anneaux profilés superposés (13), les bords supérieurs de panier ajouré (11) finissant par une bride (14).

9. Le séparateur à coalescence hybride, selon la revendication de brevet 1, est **caractérisé en ce que** le couvercle ajouré (12) de panier ajouré (11) est équipé en poignée (15).
